# EUROPÄISCHE PATENTSCHRIFT

(11) **EP 2 105 691 B1**
(45) Veröffentlichungstag und Bekanntmachung des Hinweises auf die Patenterteilung: **06.08.2014**
(21) Anmeldenummer: 09155938.5
(22) Anmeldetag: 24.03.2009
(51) Int. Cl.: F27B 17/02, F27D 21/00, A61C 13/20

(54) **Ofen zur thermischen Behandlung eines dentalen Brennobjektes**
Oven for thermal treatment of a dental burning object
Four de traitement thermique d'un objet de combustion dentaire

(30) Priorität: 25.03.2008 DE 102008015483
(43) Veröffentlichungstag der Anmeldung: 30.09.2009
(73) Patentinhaber: Ivoclar Vivadent AG, 9494 Schaan (LI)
(72) Erfinder: Jussel, Rudolf, AT-6806, Feldkirch-Tosters (AT); Laubersheimer, Dr. Jürgen, CH-9470, Buchs (CH); Werling, Christian, DE-88131, Lindau (DE); Appert, Dr. Christoph, FL-9490, Vaduz (LI)
(74) Vertreter: Baronetzky, Klaus

(56) Entgegenhaltungen:
- EP-A- 1 440 750
- DE-A1-102006 032 655
- US-A- 4 963 709
- US-A1- 2007 023 971
- US-A1- 2009 079 101

## Beschreibung

Die Erfindung betrifft einen Ofen zur thermischen Behandlung wenigstens eines dentalen Brennobjektes mit einem Gehäuse, einer Brennkammer, einem Brennkammerboden, einer Heizvorrichtung und wenigstens einem optischen Temperaturerfassungselement mit dem eine Temperatur in der Brennkammer erfassbar ist.

Es ist bekannt bei Brennöfen mit Mikrowellenheizung ein Temperatürerfassungselement mit einem optischen Sensor zu verwenden. Dieser ist auf eine möglichst ebene Flache des zu messenden Objektes gerichtet. Es wird dabei die Temperatur an der Oberfläche des Objektes gemessen.

Bei der Verwendung eines derartigen Brennofens für die thermische Behandlung von Dentalrestaurationen gibt es aber mehrere Probleme.

Eine Schwierigkeit besteht darin, dass Dentalrestaurationen keine ebenen Oberflächen aufweisen. Dies macht eine Temperaturmessung schwierig.

Problematisch ist eine Messung auch bei mehreren Dentalrestaurationen. Wenn sich nämlich mehrere Dentalrestaurationen innerhalb des Brennofens befinden, ist außerdem nicht klar, ob der Sensor des Temperaturerfassungselementes auf die sich im Zentrum oder auf die sich im Randbereich der Brennkammer befindliche Dentalrestauration ausgerichtet werden soll.

Zudem ist eine Ausrichtung des Sensors auf einzelne Dentalrestaurationen nur beschrankt möglich. Der Sensor kann nur durch eine Bohrung in der Brennkammer hindurch eine Strahlung erfassen. Der Erfassungswinkel ist daher sehr begrenzt. Der Sensor kann praktisch nur beschränkt auf ein Dentalrestaurationsteil blicken. Eine Ausrichtung der Dentalrestauration innerhalb der Brennkammer gegenüber dem Sensor des Temperaturerfassungselementes ist somit nicht möglich, da der Blick durch die Bohrung in der Brennkammer von dem Temperaturerfassungselement verstellt ist.

Aus der DE 44 14 391 DE C2 ist ein Verfahren zur berührungslosen Temperaturmessung mit einem optischen Sensor bekannt. Der Sensor ist als Pyrometer ausgeführt und dient zur Temperaturerfassung von Halbleiterscheiben in einer Schnellheizkammer.

Die DE 198 53 513 Al beschreibt einen Multimeter, das zur Bestimmung der Temperatur einer Oberfläche durch eine berührungslose Messung der in einer Entfernung von der Oberfläche wahrgenommenen Strahlung.

Die US 2001/0006174 A1 offenbart ein Verfahren zur Herstellung keramischer Körper mit Hilfe eines Hybridofens mit Mikrowellen und Infrarotstrahlung. Durch Berührungssensoren wird eine Kern-und Oberflächentemperatur des zu messenden keramischen Körpers gemessen.

In der DE-AS 1 498 822 wird ein Messeinsatz für einen Ofen vorgestellt, der einen Vergleichskörper bildet. Hierbei werden zwei Kammern verwendet, wobei eine Kammer zur Aufnahme eines Prüfkörpers und eine andere Kammer zur Aufnahme des Vergleichskörpers vorhanden sind. Die Messung erfolgt mit einem niederohmigen temperaturabhängigen Widerstandselement. Der Ofen ist Teil einer Vorrichtung zur Differentialthermoanalyse.

Ferner ist aus der DE-AS 16 48 905 ein Verfahren und ein Gerät zur thermischen Untersuchung und Beeinflussung des Zustandes von biologischen Geweben bekannt. Hierbei werden in Form von Erwärmungskapseln in ein Substrat eingebrachte Testkörper eingesetzt. Diese erwärmen sich infolge induktiver Erwärmung.

Die US-A-496 3709, EP-A-144 0750, US 2007/023 971 A1, DE102006032655 A1 und US-2009/079 101 A1 zeigen verschiedene Öfen zur thermischen Behandlung wenigstens eines dentalen Brennobjekts.

Der Erfindung liegt die Aufgabe zugrunde, einen Ofen der genannten Art zu schaffen, mit dem eine berührungslose Temperaturmessung eines dentalen Brennobjektes in einfacher Weise möglich ist.

Diese Aufgabe wird dadurch gelöst, dass das Brennobjekt auf und/oder in und/öder unter und/oder neben einem sich in der Brennkammer befindlichen Brennhilfsmittel gelagert ist und das optische Temperaturerfassungselement die Temperatur des Brennhilfsmittels erfasst. Das Brennhilfsmittel besteht aus Kugeln und/oder Granulat und/oder Pulver.

Vorteilhafte Ausgestaltungen der Erfindung sind in den Unteransprüchen gekennzeichnet.

Die Erfindung beruht auf den Gedanken, ein Brennhilfsmittel zu verwenden. Dieser wirkt mit dem Sensor des Temperaturerfassungselementes zusammen. Dieses Brennhilfsmittel kann sich unter und/oder seitlich der mit Wärme zu behandelnden Dentalrestauration befinden.

Durch die Erfindung ist es möglich, Dentalrestaurationen einzusetzen, die keine ebene Oberflächen aufweisen. Das erfindungsgemäße Hilfsmittel macht die Temperaturmessung möglich.

Unproblematisch ist es, wenn bei der Messung gleichzeitig mehrere Dentalrestaurationen vorhanden sind. Da der Sensor auf das Hilfsmittel ausgerichtet werden kann, ist eine Messung ohne Schwierigkeiten möglich.

Der Sensor kann durch eine Bohrung in der Brennkammer hindurch eine Strahlung des Hilfsmittels in einfacher Weise erfassen. Der begrenzte Erfassungswinkel ist unkritisch.

Der erfindungsgemäße Ofen erlaubt ein Verfahren zur Temperaturerfassung, bei dem ein spezieller Körper bzw. ein Zusatzkörper, der beispielsweise aus Kugeln oder Pulver ausgebildet sein kann, definiert vorgegeben ist, und dessen Temperatur anstelle der Temperatur des Brennobjektes gemessen wird. Das Messen der Temperatur erfolgt berührungslos.

In einer vorteilhaften Weiterbildung der erfindungsgemäßen Sicherheitsvorrichtung ist vorgesehen, dass das Brennhilfsmittel eine mit dem Brennobjekt vergleichbare thermische und/oder elektrische und/oder dielektrische Eigenschaft aufweist. Wenn vergleichbare thermische und/oder elektrische und/oder dielektrische Eigenschaften wie ein Dentalrestaurationsteil aufweisen, kann das Hilfsmittel die gleiche Temperatur wie das bzw. die Dentalrestaurationsteile annehmen. Dadurch ist eine sehr genaue Temperaturmessung möglich.

Von Vorteil ist es, wenn das Brennhilfsmittel in Form von Kugeln und/oder eines Granulats und/oder eines Quaders und/oder einer Platte und/oder eines Pulvers ausgebildet ist. Diese Formen lassen sich einerseits leicht realisieren und andererseits absorbieren sie Strahlung sehr schnell, wodurch Temperaturänderungen ohne zeitliche Verzögerung erfasst werden. Das Brennhilfsmittel kann platten- oder quaderförmig sowie in Form eines Granulats oder eines Pulvers ausgebildet sein. Das aus Kugeln, Granulat oder Pulver ausgebildete Brennhilfsmittel ist beispielsweise in einer offenen Wanne angeordnet. Das Dentalrestaurationsteil kann auf dem Brennhilfsmittel aufliegen oder in diesem wenigstens teilweise bzw. ganz eingebettet sein.

Bevorzugt ist das Brennhilfsmittel wenigstens zweischichtig ausgebildet. Dadurch lassen sich seine Eigenschaften in weiteren Bereichen and die Erfordernisse anpassen. Beispielsweise kann das Brennhilfsmittel die nahezu gleichen thermischen Eigenschaften wie das Brennobjekt aufweisen, oder es kann auch bei Bedarf zur zusätzlichen Wäredämmung eingesetzt werden.

Damit eine thermische Isolierung des Ofens durch den Sensor nicht beeinträchtigt wird, ist in einer weiteren vorteilhaften Weiterbildung der Erfindung zwischen dem Brennobjekt bzw. dem Brennhilfsmittel und dem optischen Temperaturerfassungselement eine transparente Scheibe angeordnet. Die Scheibe ist zweckmäßigerweise an einer Oberseite und/oder Seitenwand der Brennkammer und/oder am Brennkammerboden angeordnet.

Günstig ist es außerdem, dass sich das optische Temperaturerfassungselement an der Oberseite und/oder Seitenwand der Brennkammer und/oder am Brennkammerboden befindet, so dass der Sensor durch die Scheibe thermisch isoliert wird.

Eine Temperatursteuerung bzw. Temperaturregelung des Ofens kann in einfacher Weise dadurch bewirkt werden, dass das optische Temperaturerfassungselement mit einer Steuereinheit des Ofens in Verbindung steht. Die Temperaturregelung kann im einfachsten Fall durch eine Zweipunktregelung oder aber auch durch andere Temperaturregelung erfolgen.

Als sehr vorteilhaft hat sich herausgestellt, dass das optische Temperaturerfassungselement von einem Pyrometer gebildet ist. In Kombination mit dem Brennhilfsmittel ist der Pyrometer aufgrund seiner Messfleck-Eigenschaft optimal. Daher befindet sich innerhalb des gesamten Messflecks des Pyrometers wenigstens ein Teil des Brennhilfsmittels und/oder wenigstens ein Teil des Brennobjektes.

Möglich ist es, eine konventionelle Gas- oder Elektroheizung einzusetzen. Besonders günstig ist es allerdings, wenn die Heizvorrichtung eine Induktivheizung oder eine Mikrowellenheizung ist. Durch den berührungslosen Sensor entfallen Verbindungsleitungen innerhalb des eigentlichen Ofenraums, die induktive Ströme verursachen und praktisch eine Messung mit konventionellen Widerstandselementen unmöglich machen würden.

Nach einer vorteilhaften Ausgestaltung des erfindungsgemäßen Ofens ist seine Brennkammer gegenüber dem fest angeordneten Brennkammerboden vertikal versetzbar und/oder verschwenkbar. Dies erleichtert eine Justierung des Sensors auf das Brennhilfsmittel. Auch kann der Brennkammerboden gegenüber der fest angeordneten Brennkammer vertikal versetzbar sein.

Gemäß einer vorteilhaften Ausgestaltung ist es vorgesehen, dass das Brennhilfsmittel eine mit dem Brennobjekt vergleichbare chemische/physikalische und/oder thermische und/oder elektrische und/oder dielektrische Eigenschaft aufweist.

Das Brennhilfsmittel ist in Form von Kugeln und/oder eines Granulats und/oder eines Pulvers ausgebildet.

Gemäß einer vorteilhaften Ausgestaltung ist es vorgesehen, dass das Brennhilfsmittel wenigstens zweischichtig ausgebildet ist.

Gemäß einer vorteilhaften Ausgestaltung ist es vorgesehen, dass zwischen dem Brennhilfsmittel und dem optischen Temperaturerfassungselement eine für die Wellenlänge des Messignals transparente Scheibe angeordnet ist.

Ofen nach einem der vorhergehenden Ansprüche, dadurch gekennzeichnet dass sich die Scheibe an einer Oberseite und/oder Seitenwand der Brennkammer und/oder am Brennkammerboden befindet

Gemäß einer vorteilhaften Ausgestaltung ist es vorgesehen, dass sich das optische Temperaturerfassungselement an der Oberseite und/oder Seitenwand der Brennkammer und/oder am Brennkammerboden befindet.

Gemäß einer vorteilhaften Ausgestaltung ist es vorgesehen, dass das optische Temperaturerfassungselement mit einer Steuereinheit des Ofens in Verbindung steht.

Gemäß einer vorteilhaften Ausgestaltung ist es vorgesehen, dass das optische Temperaturerfassungselement von einem Pyrometer gebildet ist.

Gemäß einer vorteilhaften Ausgestaltung ist es vorgesehen, dass sich innerhalb des gesamten Messflecks des Pyrometers wenigstens ein Teil des Brennhilfsmittels und/oder wenigstens ein Teil des Brennobjektes befindet.

Gemäß einer vorteilhaften Ausgestaltung ist es vorgesehen, dass die Heizvorrichtung eine konventionelle Gas- oder Elektroheizung ist.

Gemäß einer vorteilhaften Ausgestaltung ist es vorgesehen, dass die Heizvorrichtung eine Induktivheizung oder eine Mikrowellenheizung ist.

Gemäß einer vorteilhaften Ausgestaltung ist es vorgesehen, dass die Brennkammer gegenüber dem fest angeordneten Brennkammerboden vertikal versetzbar und/oder verschwenkbar ist.

Gemäß einer vorteilhaften Ausgestaltung ist es vorgesehen, dass der Brennkammerboden gegenüber der fest angeordneten Brennkammer vertikal versetzbar und/oder schwenkbar und/oder drehbar ist.

Verfahren zur thermischen Behandlung, insbesondere zum Sintern eines dentalen Brennobjektes mit einem Ofen nach einem der vorhergehenden Ansprüche.

Weitere Vorteile, Einzelheiten und Merkmale ergeben sich aus der nachstehenden Beschreibung zweier Ausführungsbeispiele anhand der Zeichnungen. Es zeigen:

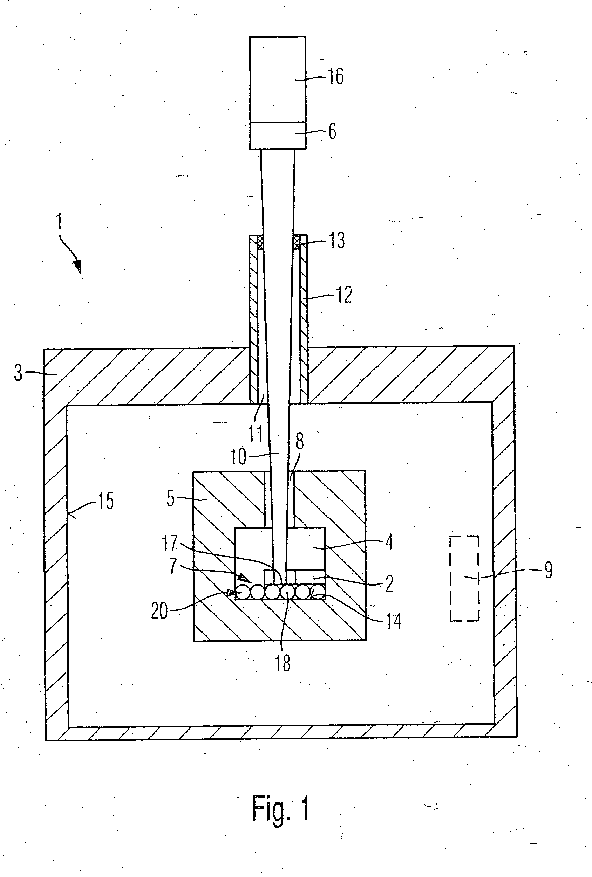

Fig. 1 zeigt eine Ausführungsform eines erfindungsgemäßen Ofens mit einem berührungslosen Sensor, in schematischer Darstellung.

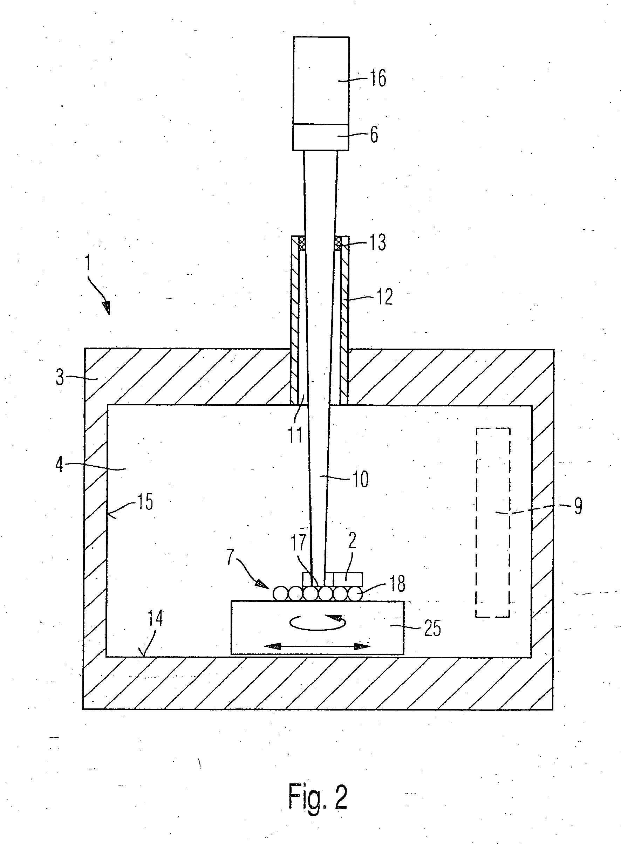

Eine modifizierte Ausführungsform eines erfindungsgemäßen Ofens ist in Fig. 2 dargestellt.

Fig. 1 zeigt eine Ausführungsform eines erfindungsgemäßen Ofens mit einem berührungslosen Sensor, in schematischer Darstellung.

Fig. 1 zeigt einen Ofen 1 zur thermischen Behandlung wenigstens eines dentalen Brerinobjektes 2. Der Ofen 1 kann als induktiv beheizter Ofen 1 ausgeführt sein. Dieser kann grundsätzlich auch mit Gas betrieben werden oder mit einem Widerstandsheizelement bzw. Infrarotstrahler ausgeführt sein. insbesondere ist der Ofen 1 aber ein mikrowellenbeheizter Ofen 1 mit einer nicht im Detail gezeigten Mikrowellen-Heizvorrichtung 9. Dieser ist mit einer Ofenhülle versehen, die ein Gehäuse 3 mit einer Brennkammer 4 hat. Die Brennkammer 4 ist eine innere Ofenkammer mit einer inneren Umhüllung 5. Diese bildet eine Isolation der inneren Ofenkammer eines Mikrowellenofens. Nur prinziphaft ist die Heizvorrichtung 9 gezeigt, die sich zwischen dem Gehäuse 3 und der inneren Umhüllung 5 befindet. Die Wirkungsweise und Anordnung einer Mikrowellen-Heizvorrichtung 9 ist hinreichend bekannt und wird deshalb nicht näher erläutert.

Mit einem optischen Temperaturerfassungselement 6 wird die Temperatur in der Brennkammer 4 bzw. der inneren Ofenkammer erfasst.

Erfindungsgemäß ist das Brennobjekt 2 neben einem sich in der Brennkammer 4 befindlichen Brennhilfsmittel 7 gelagert bzw. angeordnet.

Das optische Temperaturerfassungselement 6 erfasst direkt die Temperatur des Brennhilfsmittels 7 und nicht notwendigerweise die des eigentlichen Brennobjektes 2. Diese Temperatur wird nur mittelbar erfasst. Da beide Objekte vergleichbare Eigenschaften haben, sind ihre Temperaturen gleich. Das Brennhilfsmittel 7 hat nämlich vergleichbare thermische und/oder elektrische und/oder dielektrische Eigenschaften wie das Brennobjekt 2.

Wie in Fig. 1 gezeigt ist, hat das Brennhilfsmittel 7 die Form von Kugeln. Es kann aber auch ein Granulat, eine Platte, ein Quader oder ein Pulver eingesetzt werden. Zwar ist in Fig. 1 nur eine Kugelschicht gezeigt, das Brennobjekt 2 kann jedoch auch wenigstens zweischichtig ausgebildet sein.

Die innere Ofenkammer bzw. die Brennkammer 4 hat an ihrer Umhüllung 5 eine Öffnung bzw. Bohrung 8, damit ein Strahl 10 des Temperaturerfassungselementes 6 die Umhüllung 5 durchdringen kann. Das äußere Gehäuse 3 ist ebenfalls mit einer licht- bzw. strahlungsdurchlässigen Öffnung 11 versehen, an der sich ein röhrenartiger Flansch 12 befindet, der nach außen aus dem Gehäuse 3 in Richtung des Temperaturerfassungselementes 6 ragt.

Zwischen dem Brennhilfsmittel 7 und dem optischen Temperaturerfassungselement 6 ist eine für die zu messende Strahlung transparente, temperaturresistente Scheibe 13 angeordnet ist. Diese besteht insbesondere aus Quarzglas und dient als Abschluss des Flansches 12. Die Quarzglascheibe 13 befindet sich an einer Oberseite des Gehäuses 3 bzw. indirekt an der Oberseite der Brennkammer 4. Sie kann aber auch mitttel- oder unmittelbar an der Seitenwand der Brennkammer 4 und/oder am Brennkammerboden 14 angeordnet sein.

Das optische Temperaturerfassungselement 6 ist an der Oberseite des Gehäuses 3 bzw. an der Oberseite der Brennkammer 4 positioniert. Möglich ist eine Anordnung an einer Seitenwand 15 der Brennkammer oder am Brennkammerboden 14.

Um eine Temperaturregelung des dentalen Brennobjektes 2 zu ermöglichen, ist das optische Temperaturerfassungselement 6 mit einer nicht gezeigten elektrischen Steuereinheit des Ofens 1 verbunden. Diese kann eine Zweipunktregelung sein, die bei Unterschreiten eines ersten Schwellwertes die Mikrowellenheizung einschaltet und bei Überschreiten eines zweiten, oberen Schwellwertes diese abschaltet. Andere Temperaturregelungen z.B. PI-Regler oder PID-Regler oder Fuzzy-Regler sind aber auch möglich.

Fig. 1 zeigt den Messkopf 16 des berührungslosen, optischen Sensors zur Temperaturerfassung. Das optische Temperaturerfassungselement 6 ist vorzugsweise von einem Pyrometer gebildet. Wie die Fig. 1 veranschaulicht, befindet sich innerhalb des gesamten Messflecks 17 des Pyrometers wenigstens ein Teil des Brennhilfsmittels 7, der hier etwa zwei Kugeln erfasst. Möglich ist auch, dass der Messfleck auch einen Teil des Brennobjektes 2 erfasst. Entsprechend wäre der Messfleck größer.

Nicht gezeigt aber möglich ist, dass die Brennkammer 4 gegenüber dem fest angeordneten Brennkammerboden 14 vertikal versetzbar und/oder verschwenkbar ist oder dass der Brennkammerboden 14 gegenüber der fest angeordneten Brennkammer 4 vertikal versetzbar ist.

Diese bevorzugte Ausführungsform des erfindungsgemäßen Mikrowellenofens 1 mit dem optischen Temperaturerfassungselement 6 und dem Brennhilfsmittel 7 hat den Vorteil, dass für die Steuerung bzw. Regelung des Brennprozesses das Brennhilfsmittel 7 eine verlässliche Temperatur liefert.

Der bevorzugte Einsatz des Ofens 1 ist eine thermische Sinterbehandlung.

Durch das beschriebene Messprinzip in dem Mikrowellenofen 1 wird erreicht, dass die Temperatur optisch gemessen wird. Es werden also Thermoelemente vermieden, die aufgrund ihrer Messposition, Eigenerwärmung und Antennenwirkung bei Mikrowellenöfen nur begrenzt einsetzbar sind.

Zu berücksichtigen ist, dass die beschriebene optische Temperaturmessung eine Oberflächenmessung ist. Gemessen wird auf der Fläche des Objektes, auf welche der Sensor zielt. Im Normalfall liegt das zu messende Objekt in dieser optischen Achse.

Ein Anwender, beispielsweise ein Zahntechniker, muss ein dentales Objekt bzw. das Brennobjekt 2 bzw. nicht genau positionieren, damit eine korrekte Temperaturregelung möglich ist.

Dieser Aufwand und diese Fehlerquelle entfällt durch die Erfindung.

Durch die Erfindung werden Probleme beim Ausrichten des zahntechnischen Objektes bzw. des Brennobjektes 1 vermieden.

Außerdem werden Messprobleme bezüglich einer fehlenden gleichmäßigen oder ebenen Oberfläche des zahntechnischen Objektes 2 gelöst.

Zudem wird verhindert, dass das Brennobjekt 2 während einer Sinterung nicht mehr im Fokus steht, und zwar wegen eines Sinterschwundes.

Ohne weiteres können mehrere Brennobjekte 2 eingesetzt werden.

Unkritisch sind ungünstige Formen des Brennobjektes 2, wie eine Hufeisenform. Bei direkter Messung der Temperatur am Objekt 2 ließe sich dieses nicht plazieren. Durch die gezeigte Ausführungsform des Ofens 1 entfällt also eine exakte Positionierung des oder der Brennobjekte 2 im Messbereich des beschriebenen optischen Messsystems. Auf das durch die Kugeln geschaffene Kugelbett 18 als Brennhilfsmittel 7 können die zu sinternden Teile bzw. die Brennobjekte 7 gelegt werden, die eine für die Temperaturmessung ausreichend exakte und ähnliche Temperatur wie die Objekte aufweisen. Erfasst wird die Temperatur der Kugeln 20 des Kugelbettes 18 im Messfleck 17.

Das Kugelbett 18 besteht vorzugsweise aus demselben Material wie die Brennobjekte selbst. Dieses kann jedoch auch ein anderes oder ein gemischtes Material sein.

Anstelle von Kugeln ist auch jede andere Form möglich. Beispielsweise eine einzelne Platte oder ein Negativ des zu beheizenden Objektes 2.

Der Vorteil der Kugelbettlösung ist außerdem, dass neben einer einfachen Lagerung der zahntechnischen Teile bzw. der Brennobjekte 2 auch eine Homogenisierung der Temperatur und eine Reduzierung eines Temperaturgradienten erreicht wird und damit ein Verzug der Teile verhindert wird. Vorteilhaft ist auch, dass das Kugelbett 18 immer eine konstante Masse hat.

Die Kugeln sind in wenigstens zwei Schichten angeordnet.

Das durch Kugeln 20 geschaffene Brennhilfsmittel 7 wirkt anstatt eines Dentalrestaurationsteiles mit dem optischen Sensor des Temperaturerfassungselementes 6 zusammen. Dieses Brennhilfsmittel 7 kann sich unter und/oder seitlich der mit Wärme zu behandelnden Dentalrestaurationsteiles befinden. Günstig ist es, wenn die Kugeln 20 vergleichbare thermische und/der elektrische und/oder dielektrische Eigenschaften wie das Dentalrestaurationsteil aufweisen, damit es die gleiche Temperatur wie das bzw. die Dentalrestaurationsteile annehmen kann.

Das aus Kugeln, Granulat oder Pulver ausgebildete Brennhilfsmittel 7 ist beispielsweise in einer offenen Wanne angeordnet. Das Dentalrestaurationsteil bzw. das Brennobjekt 2 kann auf dem Brennhilfsmittel 7 aufliegen oder in diesem wenigstens teilweise bzw. ganz eingebettet sein.

Bei der Ausführungsform von Fig. 2 ist keine innere Hülle vorgesehen. Gleiche Bezugszeichen betreffen hier die gleichen Teile wie in Fig. 1. Abweichend von Fig. 1 ist bei dieser Ausführungsform eine Aufnahme 25 vorgesehen, die bevorzugt translatorisch versetzbar, aber auch drehbar ist, um eine optimale Positionierung sicherzustellen.

Die Erfindung ist nicht auf dieses Beispiel beschränkt, so muss der Sensor nicht zwangsläufig ein optischer Sensor sein. Auch andere berührungslose Sensoren sind möglich, beispielsweise IR-Sensoren oder Thermopiles. Auch die Anordnung des Sensors kann von der gezeigten Anordnung abweichen. Zwar dient die Erfindung in erster Linie zum Sintern von zahntechnischen Objekten, andere Anwendungen sind aber auch möglich.

## Patentansprüche

1. Ofen zur thermischen Behandlung wenigstens eines dentalen Brennobjektes (2), mit einem Gehäuse (3), einer Brennkammer (4), einem Brennkammerboden (14), ' einer Heizvorrichtung (9) und wenigstens einem optischen Temperaturerfassungselement (6), mit dem eine Temperatur in der Brennkammer (4) erfassbar ist,
**dadurch gekennzeichne**t, dass mit dem optischen Temperaturerfassungselement (6) die Temperatur von in der Brennkammer (4) angeordneten Brennhilfsmittel (7) erfassbar ist, und dass das dentale Brennobjekt (2) auf und/oder unter und/oder neben dem Brennhilfsmittel (7) gelagert ist, das in Form von Kugeln und/oder eines Granulates und/oder eines Pulvers ausgebildet ist.

2. Ofen nach Anspruch 1,
**dadurch gekennzeichnet, dass** mit dem optischen Temperaturerfassungselement (6) die Temperatur des Brennobjektes erfassbar ist, wobei das Brennhilfsmittel (7) eine mit dem Brennobjekt (2) vergleichbare chemische/physikalische und/oder thermische und/oder elektrische and/oder dielektrische Eigenschaft aufweist.

3. Ofen nach einem der vorhergehenden Ansprüche,
**dadurch gekennzeichnet, dass** die Brennhilfsmittel (7) an einem Brennkammerboden (14) anbringbar sind.

4. Ofen nach einem der vorhergehenden Ansprüche,
**gekennzeichnet durch** eine für die Wellenlänge des Messsignals transparente Scheibe (13), welche zwischen dem Brennhilfsmittel (7) und dem optischen Temperaturerfassungselement (6) angeordnet ist.

5. Ofen nach einem der vorhergehenden Ansprüche,
**dadurch gekennzeichnet, dass** sich die Scheibe (13) an einer Oberseite und/oder Seitenwand der Brennkammer (4) und/oder am Brennkammerboden (14) befindet.

6. Ofen nach einem der vorhergehenden Ansprüche,
**dadurch gekennzeichnet, dass** das optische Temperaturerfassungselement (6) an der Oberseite und/oder Seitenwand der Brennkammer (4) und/oder am Brennkammerboden (14) anbringbar ist.

7. Ofen nach einem der vorhergehenden Ansprüche,
**dadurch gekennzeichnet, dass** das optische Temperaturerfassungselement (6) mit einer Steuereinheit des Ofens (1) in Verbindung steht.

8. Ofen nach einem der vorhergehenden Ansprüche,
**dadurchg gekennzeichnet**, dass das optische Temperaturerfassungselement (6) von einem Pyrometer gebildet ist.

9. Ofen nach einem der vorhergehenden Ansprüche,
**dadurch gekennzeichnet, dass** der Pyrometer derart angeordnet ist, dass wenigstens ein Teil des Brennhilfsmittels (7) und/oder wenigstens ein Teil des Brennobjektes (2) vom Messfleck des Pyrometers erfassbar ist.

10. Ofen nach einem der vorhergehenden Ansprüche,
**dadurch gekennzeichnet, dass** die Heizvorrichtung (9) eine konventionelle .' Gas-oder Elektroheizung ist.

11. Ofen nach einem der vorhergehenden Ansprüche,
**dadurch gekennzeichnet, dass** die Heizvorrichtung (9) eine Induktivheizung oder eine Mikrowellenheizung ist.

12. Ofen nach einem der vorhergehenden Ansprüche,
**dadurch gekennzeichnt,** dass die Brennkammer (4) gegenüber dem fest angeordneten Brennkammerboden (14) vertikal versetzbar und/oder verschwenkbar ist.

13. Ofen nach einem der vorhergehenden Ansprüche
**dadurch gekennzeichnet, dass** der Brennkammerboden (14) gegenüber der fest angeordneten Brennkammer (4) vertikal versetzbar und/oder schwenkbar und/oder drehbar ist.

## Claims

1. A furnace for the thermal treatment of at least one dental firing object (2) comprising a housing (3), a firing chamber (4), a firing chamber base (14), a heating device (9) and at least one optical temperature detection element (6) by means of which a temperature in the firing chamber (4) can be detected,
**characterized in that** the temperature of the firing aid (7) located in the firing chamber (4) may be detected with the help of the optical temperature detection element (6) and that the dental firing object (2) is supported on and/or in and/or below and/or adjacent to the firing aid (7) which is embodied in the form of balls and/or a granulate material and/or a powder.

2. The furnace according to claim 1,
**characterized in that** with the aid of the optical temperature detection element (6) the temperature of the firing object can be detected, the firing aid (7) having a chemical/physical and/or thermal and/or electrical and/or dielectric property comparable with the firing object (2).

3. The furnace according to any of the preceding claims,
**characterized in that** the firing aid (7) is attachable to a firing chamber base (14).

4. The furnace according to any of the preceding claims,
**characterized by** a disc (13) transparent to the wavelength of the measurement signal, which disc is located between the firing aid (7) and the optical temperature detection element (6).

5. The furnace according to any of the preceding claims,
**characterized in that** the disc (13) is located on a top side and/or a side wall of the firing chamber (4) and/or at the firing chamber base (14).

6. The furnace according to any of the preceding claims,
**characterized in that** the optical temperature detection element (6) is attachable to the top side and/or side wall of the firing chamber (4) and/or to the firing chamber base (14).

7. The furnace according to any of the preceding claims,
**characterized in that** the optical temperature detection element (6) is connected to a control unit of the furnace (1).

8. The furnace according to any of the preceding claims,
**characterized in that** the optical temperature detection element (6) is formed by a pyrometer.

9. The furnace according to any of the preceding claims,
**characterized in that** the pyrometer is arranged such that at least one part of the firing aid (7) and/or at least one part of the firing object (2) can be detected by the measuring dot of the pyrometer.

10. The furnace according to any of the preceding claims,
**characterized in that** the heating device (9) is a conventional gas or electrical heating system.

11. The furnace according to any of the preceding claims,
**characterized in that** the heating device (9) is an inductive heating system or a microwave heating system.

12. The furnace according to any of the preceding claims,
**characterized in that** the firing chamber (4) is vertically displaceable and/or pivotable relative to the fixedly arranged firing chamber base (14).

13. The furnace according to any of the preceding claims,
**characterized in that** the firing chamber base (14) is vertically displaceable and/or pivotable and/or rotatable relative to the fixedly arranged firing chamber (4).

## Revendications

1. Four pour le traitement thermique d'au moins un objet de combustion dentaire (2), avec une enceinte (3), une chambre de combustion (4), un fond (14) de chambre de combustion, un dispositif de chauffage (9) et au moins un élément optique de saisie de température (6) au moyen duquel une température dans la chambre de combustion (4) peut être saisie,
**caractérisé en ce que** la température d'auxiliaires de combustion (7) disposés dans la chambre de combustion (4) peut être saisie par l'élément optique de saisie de température (6), et **en ce que** l'objet de combustion dentaire (2) est mis en place sur et/ou sous et/ou à côté d'un auxiliaire de combustion (7) se présentant sous la forme de billes et/ou de granulés et/ou de poudre.

2. Four selon la revendication 1,
**caractérisé en ce que** la température de l'objetde combustion peut être saisie par l'élément optique de saisie de température (6), l'auxiliaire de combustion (7) présentant une propriété chimique/physique et/ou thermique et/ou électrique et/ou diélectrique comparable à celle de l'objet de combustion dentaire (2).

3. Four selon l'une des revendications précédentes,
**caractérisé en ce que** les auxiliaires de combustion (7) peuvent être disposés sur un fond (14) de la chambre de combustion.

4. Four selon l'une des revendications précédentes,
**caractérisé par** une rondelle (13) transparente pour la longueur d'onde du signal de mesure, disposée entre l'auxiliaire de combustion (7) et l'élément optique de saisie de température (6).

5. Four selon l'une des revendications précédentes,
**caractérisé en ce que** la rondelle (13) se trouve contre une face supérieure et/ou une paroi latérale de la chambre de combustion (4) et/ou sur le fond (14) de la chambre de combustion.

6. Four selon l'une des revendications précédentes,
**caractérisé en ce que** l'élément optique de saisie de température (6) peut être disposé contre la face supérieure et/ou la paroi latérale de la chambre de combustion (4) et/ou sur le fond (14) de la chambre de combustion.

7. Four selon l'une des revendications précédentes,
**caractérisé en ce que** l'élément optique de saisie de température (6) est relié à une unité de commande du four (1).

8. Four selon l'une des revendications précédentes,
**caractérisé en ce que** l'élément optique de saisie de température (6) est réalisé par un pyromètre.

9. Four selon l'une des revendications précédentes,
**caractérisé en ce que** le pyromètre est disposé de manière qu'au moins une partie de l'auxiliaire de combustion (7) et/ou au moins une partie de l'objet de combustion dentaire (2) puissent être saisies par le spot de mesure du pyromètre.

10. Four selon l'une des revendications précédentes,
**caractérisé en ce que** le dispositif de chauffage (9) est un chauffage au gaz ou un chauffage électrique ordinaire.

11. Four selon l'une des revendications précédentes,
**caractérisé en ce que** le dispositif de chauffage (9) est un chauffage par induction ou un chauffage par micro-ondes.

12. Four selon l'une des revendications précédentes,
**caractérisé en ce que** la chambre de combustion (4) est déplaçable verticalement et/ou pivotante par rapport au fond (14) fixe de la chambre de combustion..

13. Four selon l'une des revendications précédentes,
**caractérisé en ce que** le fond (14) de la chambre de combustion est déplaçable verticalement et/ou pivotant et/ou rotatif par rapport à la chambre de combustion (4) fixe.
